# EUROPÄISCHE PATENTSCHRIFT

(11) **EP 0 458 090 B1**
(45) Veröffentlichungstag und Bekanntmachung des Hinweises auf die Patenterteilung: **21.09.1994**
(21) Anmeldenummer: 91106944.1
(22) Anmeldetag: 29.04.1991
(51) Int. Cl.: B09B 3/00, A62D 3/00, E21B 43/00

(54) **Anordnung zur Gasbehandlung von verunreinigtem Erdreich**
Device for the treatment of contaminated soils by a gas
Dispositif pour le traitement de sols pollués par un gaz

(30) Priorität: 23.05.1990 DE 4016586; 09.07.1990 DE 4021814
(43) Veröffentlichungstag der Anmeldung: 27.11.1991
(73) Patentinhaber: IEG Industrie-Engineering GmbH, D-72770 Reutlingen (DE)
(72) Erfinder: Bernhardt, Bruno, W-7410 Reutlingen (DE)
(74) Vertreter: Möbus, Rudolf, Dipl.-Ing.

(56) Entgegenhaltungen:
- EP-A- 0 304 712
- EP-A- 0 328 993
- DE-A- 3 400 799
- DE-A- 3 626 145
- US-A- 2 217 370
- US-A- 4 593 760

## Beschreibung

Die Erfindung betrifft eine Anordnung zur Gasbehandlung von verunreinigtem Erdreich an Ort und Stelle, mit einem in das in diesem Bereich gasdicht abgedeckte Erdreich getriebenen Schacht gut mindestens teilweise gasdurchlässiger Schachtwandung.

Zum Austreiben leichtflüchtiger Verunreinigungen aus dem Erdreich ist bereits vorgeschlagen worden, in einem in das verunreinigte Erdreich getriebenen Schacht mit gasdurchlässiger Schachtwandung durch Absaugen von Luft einen Unterdruck zu erzeugen, so daß Luft zusammen mit den flüchtigen Verunreinigungen aus dem Erdreich in den Schacht nachströmt und aus dem Schacht zu einer Filtereinrichtung abgesaugt werden kann. Durch im Umkreis eingebrachte zusätzliche Bohrungen kann dabei das Nachfließen von Luft in das verunreinigte Erdreich begünstigt werden (DE-A- 37 28 299). Mit dem genannten Verfahren werden hervorragende Ergebnisse erzielt.

Schwieriger und aufwendiger gestaltet sich die Reinigung von verunreinigtem Erdreich, wenn die Verunreinigungen überwiegend durch schwerlösliche Stoffe verursacht sind. Hier wird derzeit das verunreinigte Erdreich abgetragen und durch Ausbrennen der Verunreinigungen in Durchlauföfen entfernt, oder das abgetragene Erdreich wird auf Sondermülldeponien abgelagert. Dieses Verfahren ist mit sehr hohen Kosten verbunden und läßt sich nur begrenzt und in unbebautem Gelände anwenden. Hier haben aber Vorversuche gezeigt, daß es möglich ist, auch bei einem höheren Anteil von schwerflüchtigen Verunreinigungen eine Reinigung des Erdreichs an Ort und Stelle, wenn auch erst über einen längeren Behandlungszeitraum, zu erreichen.

Der Erfindung liegt die Aufgabe zugrunde, eine Anordnung der eingangs genannten Art so auszubilden, daß mit ihrer Hilfe mit geringem Energieaufwand und raumsparend eine Reinigung verunreinigten Erdreiches erreicht werden kann.

Die gestellte Aufgabe wird mit dieser Anordnung erfindungsgemäß dadurch gelöst, daß im Schacht mit Abstand von der dicht verschließbaren Schachtöffnung ein Abschnitt mit gasundurchlässiger Schachtwandung gebildet ist, der zwischen zwei Schachtabschnitten mit gasdurchlässiger Wandung liegt, daß eine Gasfördervorrichtung zur Erzeugung einer Gasumlaufströmung im Schacht und im Erdreich vorgesehen ist, daß mindestens eine Vorrichtung zur Beeinflussung der Stärke der Gasströmung im Schacht in Abhängigkeit von der Dichte des Erdreiches zur Erzielung und Beibehaltung einer laminaren Gasströmung im Erdreich vorgesehen ist und daß mindestens in einem der Schachtabschnitte mit gasdurchlässiger Wandung die Zusammensetzung des Gasstromes verändernde Elemente angeordnet sind.

In den meisten Einsatzfällen genügt Luft zur Bildung des Gasstromes. In den Schacht kann aber auch ein besonderes Behandlungsgas oder Trägergas eingebracht werden. In jedem Falle ist für den Wirkungsgrad der Anordnung entscheidend, daß die Gasströmung in den Bereichen des Gasaustritts und des Gaseintritts in den Schacht so eingestellt ist, daß das Gas auf seinem Weg durch das verunreinigte Erdreich eine laminare Strömung beibehalten kann. Bei dieser Einstellung der Gasströmung muß die Dichte des verunreinigten Erdreiches berücksichtigt werden. Wird durch einen zu starken Druck ein Abriß der laminaren Gasströmung und eine Wirbelbildung verursacht, wird die wichtige gleichmäßige Einwirkung des Gases auf das Erdreich empfindlich gestört. Außerdem muß zur Erzielung und Aufrechterhaltung einer turbulenten Gasströmung durch das Erdreich ein wesentlich höherer Energieaufwand getrieben werden, der bei der auch noch verschlechterten Reinigungswirkung die Wirtschaftlichkeit der Anordnung in Frage stellen würde.

Die Gasfördervorrichtung zur Erzeugung der Gasumlaufströmung kann sowohl im Schacht im Abschnitt mit gasundurchlässiger Schachtwandung als auch außerhalb des Schachtes angeordnet sein. Bei Anordnung außerhalb des Schachtes kann die Gasfördervorrichtung mit weiteren Filtereinrichtungen versehen und über konzentrisch geführte Rohre mit den beiden gasdurchlässigen Bereichen des Schachtes verbunden sein. Die Richtung der durch die Fördervorrichtung erzeugten Gasumlaufströmung ist durch einfaches Umschalten der Gasfördervorrichtung jederzeit umkehrbar.

Die Vorrichtung zur Beeinflussung der Stärke der Gasströmung im Schacht kann eine Steuer- oder Regelvorrichtung sein, welche die Leistungsaufnahme der Gasfördervorrichtung verändert, beispielsweise die Drehzahl eines als Gasfördervorrichtung verwendeten Radialventilators. Hierbei ist auch eine automatische Regelung, abhängig beispielsweise von der Strömungsstärke im Schacht oder der Druckverteilung im Schacht, möglich. Die Vorrichtung kann aber auch als reine Gasstrom-Bremsvorrichtung ausgebildet sein. Eine solche Bremsvorrichtung muß nicht, beispielsweise nach Art einer Blende, verstellbar sein. An vielen Einsatzstellen ist eine gleichmäßige Bodendichte vorhanden, die den Einsatz eines unverstellbaren Gasströmungswiderstandes erlaubt. Ein solcher vorgegebener Gasströmungswiderstand läßt sich beispielsweise erfindungsgemäß dadurch erzielen, daß der Gasdurchtrittswiderstand in den Bereichen der gasdurchlässigen Wandung durch eine entsprechende Wahl oder Ausbildung dieser Wandungsbereiche festgelegt wird.

Die Elemente zur Veränderung der Zusammensetzung des Gasstromes müssen bei der erfindungsgemäß ausgebildeten Anordnung nicht nur die üblichen, gasförmige Verunreinigungen aufnehmenden Gasfilter sein, sondern können auch allein oder zusätzlich Vorrichtungen zur Abgabe von Stoffen in den Gasstrom oder einen Gasteilstrom sein, die eine chemische Einwirkung auf die Verunreinigungen im Erdreich haben.

Bei einer bevorzugten Ausbildungsform der Anordnung ist im Schacht ein Rohreinsatz auswechselbar angeordnet, der Siebwandungen beiderseits eines geschlossenwandigen, die Gasfördervorrichtung enthaltenden Rohrabschnittes aufweist und dessen geschlossenwandiger Rohrabschnitt mittels mindestens einer äußeren Dichtmanschette gegenüber der Schachtwandung abdichtbar ist. Der Rohreinsatz kann an seinem unteren Ende mit einer Flüssigkeits-Sammelwanne versehen sein.

Die gasdurchlässigen Siebwandungen des Rohreinsatzes können zweckmäßig aus Siebtuchbahnen bestehen, die schraubenartig über rohrachsparallele Stützstäbe oder -stege des Rohreinsatzes gewickelt sind. Die Siebtuchbahnen können ein- oder mehrlagig, stumpf aneinanderstoßend oder mit sich überlappenden Rändern gewickelt sein. Durch die Zahl der Lagen oder die Stärke der Überlappungsbereiche läßt sich der Durchlaßwiderstand dieser Wandungsbereiche für den Gasstrom einstellen.

Die Einrichtungsteile für die Anordnung lassen sich preisgünstig herstellen. Die ganze Anordnung erfordert wenig Raumaufwand, da zusätzliche Luft-Nachströmschächte entfallen. Die Anordnung läßt sich überall, auch in bebauten Gebieten, einsetzen, wo eine weitgehend gasdichte Abdeckung des zu reinigenden Erdreichbereiches sichergestellt werden kann. Das mit der erfindungsgemäß ausgebildeten Anordnung betriebene Verfahren mit laminarer Gasströmung läßt sich mit Gasfördervorrichtungen mit geringem Energieverbrauch durchführen, so daß sich mit dieser Anordnung auch Langzeit-Bodenbehandlungen auf wirtschaftliche Weise durchführen lassen, selbst wenn zusätzliche Heizvorrichtungen zur Erhöhung der Wirksamkeit des verwendeten Gases und der die Zusammensetzung des Gasstromes verändernden Elemente oder auch zur Beeinflussung der im Schacht auftretenden Druckdifferenzen eingebracht werden. Bei der Verwendung eines Rohreinsatzes kann dieser Rohreinsatz in regelmäßigen Abständen zur Reinigung und zum Auswechseln oder Reaktivieren der verwendeten Elemente zur Beeinflussung der Zusammensetzung des Gasstromes entnommen werden.

Nachfolgend wird ein Ausführungsbeispiel einer erfindungsgemäß ausgebildeten Anordnung anhand der beiliegenden Zeichnung näher erläutert.

Im einzelnen zeigen:
- Fig. 1: einen zentralen Längsschnitt durch eine erste Ausführungsform einer in einen Schacht eingebrachten Anordnung;
- Fig. 2: einen Querschnitt durch die Anordnung in einem gasdurchlässigen Wandungsbereich entlang der Linie II - II in Fig. 1;
- Fig. 3: einen zentralen Längsschnitt durch eine zweite Ausführungsform der Anordnung.

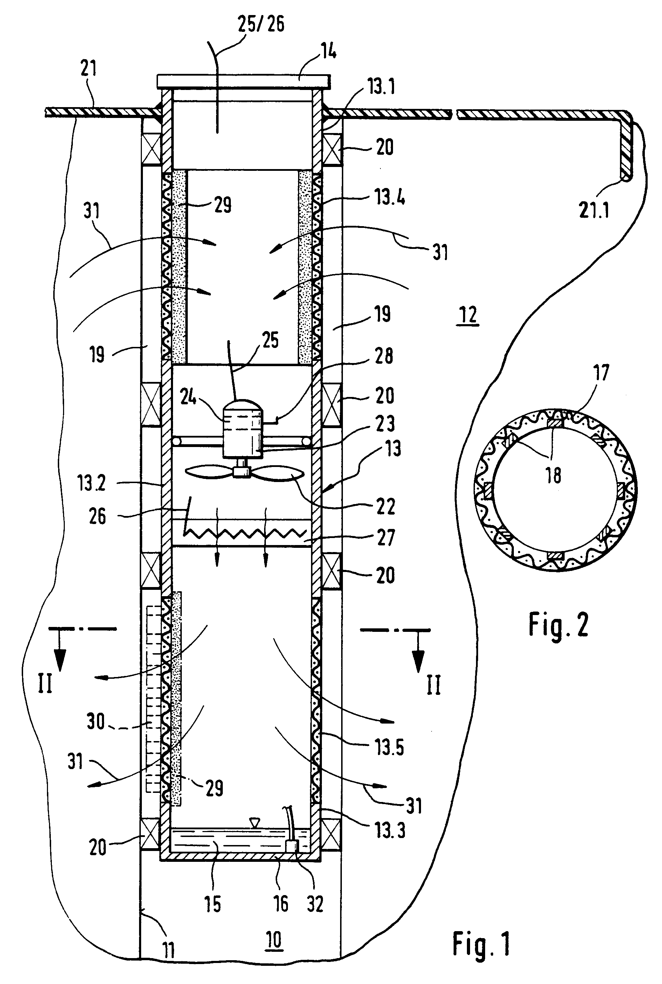

Fig. 1 zeigt eine Schachtbohrung 10 mit der Schachtwandung 11, die in einem verunreinigten, grundwasserfreien Erdreich 12 niedergebracht worden ist. In dem Schacht ist ein Rohreinsatz 13 auswechselbar angeordnet, der über seine Länge in mehrere Rohrabschnitte gegliedert ist. An seinem oberen, durch einen Deckel 14 gasdicht verschließbaren Ende weist er einen Endabschnitt 13.1 mit einer gasundurchlässigen Rohrwandung auf. Ebenfalls eine gasundurchlässige Rohrwandung weisen ein mittlerer Rohrabschnitt 13.2 und ein innerer Endabschnitt 13.3, der zur Bildung einer Flüssigkeits-Sammelwanne 15 mit einer Stirnwandung 16 verschlossen ist, auf. Zwischen dem oberen Endabschnitt 13.1 und dem mittleren Rohrabschnitt 13.2 des Rohreinsatzes 13 ist ein erster oder oberer Rohrabschnitt 13.4 mit einer gasdurchlässigen Siebwandung ausgebildet. Ein ebenfalls mit einer gasdurchlässigen Siebwandung versehener Rohrabschnitt 13.5 befindet sich zwischen dem mittleren Rohrabschnitt 13.2 und dem unteren Endabschnitt 13.3 des Rohreinsatzes 13. Die Siebwandungen der Rohrabschnitte 13.4 und 13.5 können gemäß Fig. 2 aus Bahnen von gewobenen Siebtüchern 17 gebildet sein, die gemäß Fig. 2 auf rohrachsparallele Stützstege 18 aufgewickelt sind, welche eine Verbindung zwischen den geschlossenwandigen Rohrabschnitten 13.1 - 13.3 bilden. Wie in der Zeichnung nicht im einzelnen dargestellt ist, können die gewobenen Siebtuchbahnen 17 auch mehrlagig gewickelt sein oder sich mit ihren Randbereichen gegenseitig überlappen. Wie in Fig. 1 angedeutet ist, ist der zwischen dem Rohreinsatz 13 und der Schachtwandung 11 bestehende Zwischenraum 19 in den Bereichen der geschlossenwandigen Rohrabschnitte 13.1 - 13.3 jeweils durch ringförmige Dichtmanschetten 20 überbrückt und unterbrochen. Bei den Dichtmanschetten 20 kann es sich um nach dem Einbringen des Rohreinsatzes in die Schachtbohrung 10 aufblasbare Dichtmanschetten handeln.

Der mit der Anordnung zu reinigende Bereich des Erdreiches 12 ist rings um die Schachtbohrung 10 mit einer gasdichten Folie 21 abgedeckt, die dicht an den oberen Endabschnitt 13.1 des Rohreinsatzes 13 anschließt und deren Außenrand 21.1 dicht in das Erdreich 12 eingebettet ist.

Im Innern des mittleren geschlossenwandigen Rohrabschnittes 13.2 ist als Gasfördervorrichtung ein Radialventilator 22 zusammen mit seinem elektrischen Antriebsmotor 23 und mit einer seine Drehzahl beeinflussenden Steuervorrichtung 24 angeordnet. Sein elektrisches Anschlußkabel 25 ist zusammen mit dem Anschlußkabel 26 für eine ebenfalls im Rohrabschnitt 13.2 angeordnete elektrische Heizvorrichtung 27 gasdicht durch den Deckel 14 des Rohreinsatzes nach außen geführt. Die Steuervorrichtung 24 ist beim dargestellten Ausführungsbeispiel mit einem Strömungsfühler 28 versehen. Der Radialventilator 22 erzeugt im Rohreinsatz 13 eine von oben nach unten gerichtete Gasströmung.

Die Siebwandung des oberen gasdurchlässigen Rohrabschnittes 13.4 ist innenseitig mit einem Gasfiltermantel 29 versehen. Ein solcher innerer Gasfiltermantel kann auch im unteren gasdurchlässigen Rohrabschnitt 13.5 angeordnet sein, wie mit strichpunktierten Linien angedeutet ist. Dort ist mit strichpunktierten Linien auch eine äußere Auflage 30 auf die Siebwandung angedeutet. Es handelt sich um eine gasdurchlässige Auflage 30, die zur Abgabe an den Gasstrom vorgesehene Stoffe enthält, die eine chemische Einwirkung auf die im Erdreich enthaltenen Verunreinigungen haben. Der mittels des Radialventilators 23 erzwungene laminare Gasumlaufstrom aus der Schachtbohrung 10 in das Erdreich 12 und zurück ist durch Pfeile 31 angedeutet. Hierbei im Rohreinsatz 13 anfallendes Sickerwasser kann aus der Flüssigkeits-Sammelwanne 15 erforderlichenfalls mittels einer Tauchpumpe 32 abgesaugt werden.

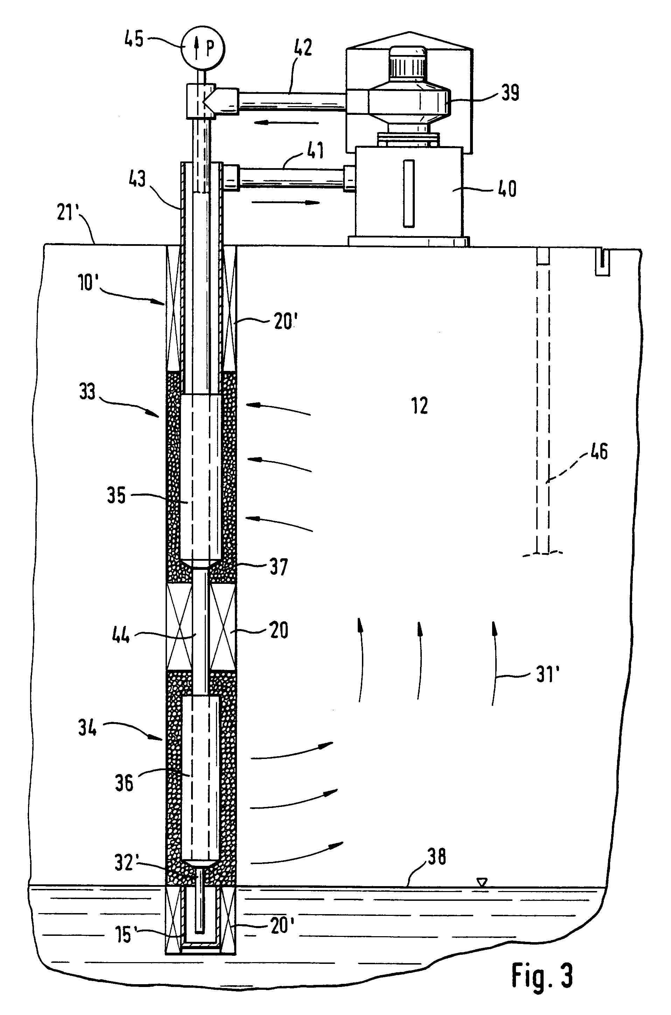

Fig. 3 zeigt eine zweite Ausführungsform einer erfindungsgemäßen Anordnung. In einer nach außen durch eine Abdeckung 21' abgeschlossenen Schachtwandung 10' sind durch Dichtungsmanschetten 20' zwei voneinander abgetrennte Schachtbereiche 33 und 34 gebildet, in denen die Schachtwandung gasdurchlässig ausgebildet ist. Innerhalb dieser Bereiche 33 und 34 sind Doppelmantelfilter 35 und 36, die von Filterkies 37 umgeben sind, angeordnet. An seinem unteren Ende ist der Schacht 10' mit einem als Flüssigkeitssammelbehälter dienenden Topfeinsatz 15', der unterhalb des Grundwasserspiegels 38 angeordnet ist, abgeschlossen. Zur Erzeugung der Gasumlaufströmung 31' ist oberhalb der Erdoberfläche ein Ventilator 39, dem ein Wasserabscheider 40 vorgeschaltet ist, angeordnet. Der Ventilator 39 ist über zwei Verbindungsrohre 41, 42 mit konzentrisch im Schacht angeordneten Rohren 43, 44 verbunden, wobei das äußere Rohr 43 bis zum gasdurchlässigen Schachtbereich 33 reicht und dem Absaugen des kontaminierten Gases dient. Das innere Rohr 44 ist bis zum unteren gasdurchlässigen Schachtbereich 34 geführt und dient zum Einleiten von Gas, das in das Erdreich 12 austreten kann. Innerhalb des inneren Rohres 44 ist noch ein Wasserabsaugrohr 32' angeordnet, das mit einer außerhalb des Schachtes 10 angeordneten Pumpe 45 verbunden ist und dem Absaugen von Flüssigkeit aus dem Topfeinsatz 15' dient. In einiger Entfernung vom Schacht ist eine Bohrung 46 zum Druckausgleich in das Erdreich 12 eingebracht.

Auch bei dieser Anordnung kann durch eine entsprechende Füllung der Doppelmantelfilter 35, 36 die Geschwindigkeit der Gasströmung 31' beeinflußt werden. Außerdem sind weitere Einrichtungen an der Erdoberfläche, wie Kohlefilter oder eine Umschalteinrichtung zur Umkehr der Richtung der Gasumlaufströmung, denkbar. Das Gas wird in den oberen Schachtbereich 33 eingepreßt und im unteren Bereich 34 wieder abgesaugt.

## Patentansprüche

1. Anordnung zur Gasbehandlung von verunreinigtem Erdreich an Ort und Stelle, mit einem in das in diesem Bereich gasdicht abgedeckte Erdreich getriebenen Schacht mit mindestens teilweise gasdurchlässiger Schachtwandung, dadurch gekennzeichnet, daß im Schacht (10) mit Abstand von der dicht verschließbaren Schachtöffnung ein Abschnitt mit gasundurchlässiger Schachtwandung gebildet ist, der zwischen zwei Schachtabschnitten mit gasdurchlässiger Wandung liegt, daß eine Gasfördervorrichtung (22) zur Erzeugung einer Gasumlaufströmung (31) im Schacht (10) und im Erdreich (12) vorgesehen ist, daß mindestens eine Vorrichtung zur Beeinflussung der Stärke der Gasströmung (31) im Schacht in Abhängigkeit von der Dichte des Erdreiches (12) zur Erzielung und Beibehaltung einer laminaren Gasströmung im Erdreich (12) vorgesehen ist und daß mindestens in einem der Schachtabschnitte mit gasdurchlässiger Wandung die Zusammensetzung des Gasstromes verändernde Elemente angeordnet sind.

2. Anordnung nach Anspruch 1, dadurch gekennzeichnet, daß die Gasfördervorrichtung im Schachtabschnitt mit gasundurchlässiger Wandung angeordnet ist.

3. Anordnung nach Anspruch 1, dadurch gekennzeichnet, daß die Gasfördervorrichtung mit oder ohne zusätzlichen Filtervorrichtungen außerhalb des Schachtes angeordnet ist und über konzentrisch angeordnete Rohre mit den Schachtabschnitten mit gasdurchlässiger Wandung verbunden ist.

4. Anordnung nach einem der Ansprüche 1 bis 3, dadurch gekennzeichnet, daß die Richtung der durch die Gasfördervorrichtung erzeugten Gasumlaufströmung (31) umkehrbar ist.

5. Anordnung nach Anspruch 1, dadurch gekennzeichnet, daß die Vorrichtung zur Beeinflussung der Stärke der Gasströmung (31) im Schacht (10) aus einer Vorrichtung (24) zur Steuerung der Leistungsaufnahme der Gasfördervorrichtung (22) besteht.

6. Anordnung nach Anspruch 1, dadurch gekennzeichnet, daß die Vorrichtung zur Beeinflussung der Stärke der Gasströmung (31) im Schacht (10) aus mindestens einer einstellbaren Gasstrom-Bremsvorrichtung besteht.

7. Anordnung nach einem der Ansprüche 1 bis 6, dadurch gekennzeichnet, daß im Schacht (10) ein Rohreinsatz (13) auswechselbar angeordnet ist, der Siebwandungen beiderseits eines geschlossenwandigen, die Gasfördervorrichtung (22) enthaltenden Rohrabschnittes (13.2) aufweist und dessen geschlossenwandiger Rohrabschnitt (13.2) mittels mindestens einer äußeren Dichtmanschette (20) gegenüber der Schachtwandung (11) abdichtbar ist.

8. Anordnung nach Anspruch 7, dadurch gekennzeichnet, daß der Rohreinsatz (13) auch in seinem oberen und unteren Endbereich (Rohrabschnitte 13.1, 13.3) gegenüber der Schachtwandung abdichtbar ist (Dichtmanschetten 20).

9. Anordnung nach Anspruch 7 oder 8, dadurch gekennzeichnet, daß am unteren Ende des Rohreinsatzes (13) eine Flüssigkeits-Sammelwanne (15) ausgebildet ist.

10. Anordnung nach einem der Ansprüche 1 bis 9, dadurch gekennzeichnet, daß in dem zentralen gasundurchlässigen Wandungsabschnitt (13.2) des Schachtes oder Rohreinsatzes (13) im Gasströmungsbereich zusätzlich mindestens eine Heizvorrichtung (27) angeordnet ist.

11. Anordnung nach einem der Ansprüche 1 bis 10, dadurch gekennzeichnet, daß die Gasfördervorrichtung aus einem Axialventilator (22) besteht.

12. Anordnung nach Anspruch 1, dadurch gekennzeichnet, daß die die Zusammensetzung des Gasstromes (31) verändernden Elemente Gasfilter (29) zur Adsorption von im Gasstrom enthaltenen Gasanteilen sind.

13. Anordnung nach Anspruch 1, dadurch gekennzeichnet, daß die die Zusammensetzung des Gasstromes verändernden Elemente Vorrichtungen zur Abgabe von Stoffen in den Gasstrom (31) oder einen Gasteilstrom sind.

14. Anordnung nach Anspruch 12 oder 13, dadurch gekennzeichnet, daß die Gasfilter (29) und/oder Stoffabgabevorrichtungen (30) aus Abdeckungen einer gasdurchlässigen Wandung des Schachtes oder des Rohreinsatzes (13) bestehen.

15. Anordnung nach einem der Ansprüche 1 bis 14, dadurch gekennzeichnet, daß die gasdurchlässigen Siebwandungen des Rohreinsatzes (13) aus Siebtuchbahnen (17) bestehen, die schraubenartig über rohrachsparallele Stützstäbe oder -Stege (18) des Rohreinsatzes (13) gewickelt sind (Fig. 2).

16. Anordnung nach Anspruch 15, dadurch gekennzeichnet, daß die Siebtuchbahnen (17) einlagig mit sich überlappenden Rändern gewickelt sind.

## Claims

1. Arrangement for gas treatment of polluted soil on location, comprising a shaft which is driven into soil, which is in this area covered so as to be airtight, with an at least partially gas-permeable shaft wall, **characterised in that** in the shaft (10) and at a distance from the tightly sealable shaft opening is formed a section with a gas-impermeable shaft wall which is located between two shaft sections with gas-permeable wall, that a gas-delivery means (22) is provided to generate a gas-circulation flow (31) in the shaft (10) and in the soil (12), that at least one device is provided for influencing the strength of the gas flow (31) in the shaft in dependence on the density of the soil (12) in order to achieve and maintain a laminar gas flow in the soil (12), and that at least in one of the shaft sections with gas-permeable wall are arranged elements for changing the composition of the gas flow.

2. Arrangement according to claim 1, **characterised in that** the gas-delivery means is placed in the shaft section with gas-impermeable wall.

3. Arrangement according to claim 1, **characterised in that** the gas-delivery means is arranged with or without additional means of filtration outside the shaft and connected to the shaft sections with gas-permeable wall by means of concentrically arranged pipes.

4. Arrangement according to one of claims 1 to 3, **characterised in that** the direction of a gas-circulation flow (31) as generated by the gas-delivery means is reversible.

5. Arrangement according to claim 1, **characterised in that** the device for influencing the strength of the gas flow (31) in the shaft (10) is composed of a device (24) for controlling the operational input of the gas-delivery device (22).

6. Arrangement according to claim 1, **characterised in that** the device for influencing the strength of the gas flow (31) in the shaft (10) is composed of at least one adjustable gas-flow retarding device.

7. Arrangement according to one of claims 1 to 6, **characterised in that** an exchangeable pipe insert (13) is fitted in the shaft (10), having sieve walls on both sides of a closed-wall pipe section (13.2) which houses the gas-delivery means (22) and the closed-wall pipe section (13.2) of which is sealable against the shaft wall (11) by way of at least one outer sealing collar (20).

8. Arrangement according to claim 7, **characterised in that** the pipe insert (13) is also sealable (sealing collars 20) against the shaft wall in its top and bottom end region (pipe sections 13.1, 13.3).

9. Arrangement according to claim 7 or 8, **characterised in that** a fluid receptacle (15) is formed at the bottom end of the pipe insert (13).

10. Arrangement according to one of claims 1 to 9, **characterised in that** additionally at least one heating device (27) is arranged in the central gas-impermeable wall section (13.2) of the shaft or in the pipe insert (13) in the gas-delivery area.

11. Arrangement according to one of claims 1 to 10, **characterised in that** the gas-delivery means is an axial ventilator (22).

12. Arrangement according to claim 1, **characterised in that** the elements which change the composition of a gas flow (31) are gas filters (29) for adsorption of gas portions in the gas flow.

13. Arrangement according to claim 1, **characterised** in that the elements which change the composition of a gas flow are devices for releasing substances into the gas flow (31) or into a portion of the gas flow.

14. Arrangement according to claim 12 or 13, **characterised in that** the gas filters (29) an/or the substance-releasing devices (30) are composed of covers of a gas-permeable wall of the shaft or of the pipe insert (13).

15. Arrangement according to one of claims 1 to 24, **characterised in that** the gas-permeable sieve walls of the pipe insert (13) are made of sieve-cloth layers (17) which are parallel to the pipe axis and helically wound onto support bars or webs (18) of the pipe insert (13) (Fig. 2).

16. Arrangement according to claim 15, **characterised in that** the sieve-cloth layers (17) are wound in single layers with overlapping edges.

## Revendications

1. Dispositif pour le traitement par du gaz de sol pollué sur place, avec un puits entraîné dans la terre recouverte étanche au gaz dans cette zone avec paroi de puits au moins partiellement perméable au gaz, caractérisé en ce qu'une section avec paroi de puits imperméable au gaz est formée dans le puits (10) à distance de l'ouverture du puits pouvant être fermée de façon étanche, laquelle est située entre deux sections de puits avec paroi perméable au gaz, en ce qu'un dispositif de transport de gaz (22) pour génération d'un écoulement de circulation de gaz (31) est prévu dans le puits (10) et dans la terre (12), en ce qu'au moins un dispositif est prévu pour influencer la force de l'écoulement de gaz (31) dans le puits en fonction de la densité de la terre (12) pour obtenir et conserver un écoulement de gaz laminaire dans la terre (12) et en ce que des éléments modifiant la composition du flux de gaz sont disposés dans au moins une des sections de puits avec paroi perméable au gaz.

2. Dispositif selon la revendication 1, caractérisé en ce que le dispositif de transport de gaz est disposé dans la section de puits avec paroi imperméable au gaz.

3. Dispositif selon la revendication 1, caractérisé en ce que le dispositif de transport de gaz est disposé à l'extérieur du puits avec ou sans dispositif de filtre supplémentaire, et relié aux sections de puits avec paroi perméable au gaz par l'intermédiaire de tubes disposés concentriquement.

4. Dispositif selon l'une des revendications 1 à 3, caractérisé en ce que la direction de l'écoulement de circulation de gaz (31) produit par le dispositif de transport de gaz est réversible.

5. Dispositif selon la revendication 1, caractérisé en ce que le dispositif pour influencer la force de l'écoulement de gaz (31) dans le puits (10) est constitué d'un dispositif (24) pour la commande de la puissance absorbée du dispositif de transport de gaz (22).

6. Dispositif selon la revendication 1, caractérisé en ce que le dispositif pour influencer la force de l'écoulement de gaz (31) dans le puits (10) est constitué d'au moins un dispositif de freinage du flux de gaz réglable.

7. Dispositif selon l'une des revendications 1 à 6, caractérisé en ce qu'un insert de tube (13) est disposé amovible dans le puits (10), lequel présente des parois perforées des deux côtés d'une section de tube (13.2) à paroi fermée contenant le dispositif de transport de gaz (22) et dont la section de tube à paroi fermée (13.2) peut être rendue étanche par rapport à la paroi de puits (11) au moyen d'au moins un manchon étanche extérieur (20).

8. Dispositif selon la revendication 7, caractérisé en ce que l'insert de tube (13) peut être rendu étanche (manchons étanches 20) par rapport à la paroi de puits aussi dans sa zone d'extrémité supérieure et inférieure (sections de tube 13.1, 13.3).

9. Dispositif selon la revendication 7 ou 8, caractérisé en ce qu'une cuve de collecte de liquide (15) est formée à l'extrémité inférieure de l'insert de tube (13).

10. Dispositif selon l'une des revendications 1 à 9, caractérisé en ce qu'au moins un dispositif de chauffage (27) supplémentaire est disposé dans la section de paroi imperméable au gaz centrale (13.2) du puits ou de l'insert de tube (13) dans la zone d'écoulement de gaz.

11. Dispositif selon l'une des revendications 1 à 10, caractérisé en ce que le dispositif de transport de gaz est constitué d'un ventilateur axial (22).

12. Dispositif selon la revendication 1, caractérisé en ce que les éléments modifiant la composition du flux de gaz (31) sont des filtres à gaz (29) pour l'adsorption de particules de gaz contenues dans le flux de gaz.

13. Dispositif selon la revendication 1, caractérisé en ce que les éléments modifiant la composition du flux de gaz sont des dispositifs pour la distribution de matières dans le flux de gaz (31) ou un flux partiel de gaz.

14. Dispositif selon la revendication 12 ou 13, caractérisé en ce que les filtres à gaz (29) et/ou dispositifs de distribution de matières (30) sont constitués de recouvrements d'une paroi perméable au gaz du puits ou de l'insert de tube (13).

15. Dispositif selon l'une des revendications 1 à 14, caractérisé en ce que les parois perforées perméables au gaz de l'insert de tube (13) sont constituées de bandes de tissu de tamisage (17) qui sont enroulées en forme de spirale sur des baguettes ou entretoises de soutien (18) de l'insert de tube (13) parallèles à l'axe du tube (Fig. 2).

16. Dispositif selon la revendication 15, caractérisé en ce que les bandes de tissu de tamisage (17) sont enroulées sur une couche avec des bords se chevauchant.
